# EUROPEAN PATENT SPECIFICATION

(11) **EP 4 332 567 B1**
(45) Date of publication and mention of the grant of the patent: **29.04.2026**
(21) Application number: 21939321.2
(22) Date of filing: 30.04.2021
(51) Int. Cl.: G01N 30/86

(54) **ANALYSIS DEVICE AND WAVEFORM PROCESSING PROGRAM FOR ANALYSIS DEVICE**
ANALYSEVORRICHTUNG UND WELLENFORMVERARBEITUNGSPROGRAMM FÜR EINE ANALYSEVORRICHTUNG
DISPOSITIF D'ANALYSE ET PROGRAMME DE TRAITEMENT DE FORMES D'ONDES POUR DISPOSITIF D'ANALYSE

(43) Date of publication of application: 06.03.2024
(73) Proprietor: Shimadzu Corporation, Nakagyo-ku, Kyoto-shi, Kyoto 604-8511 (JP)
(72) Inventor: YASUDA, Hiroyuki, Kyoto-shi, Kyoto 604-8511 (JP)
(74) Representative: Müller-Boré & Partner Patentanwälte PartG mbB
(86) International application number: PCT/JP2021/017153
(87) International publication number: WO 2022/230162

(56) References cited:
- EP-A2- 0 395 481
- WO-A1-2019/092836
- JP-A- 2001 165 923
- JP-A- 2010 032 277
- JP-A- 2019 086 473
- JP-A- 2019 086 475
- JP-A- H0 694 696
- US-A1- 2020 279 408
- MELNIKOV ARSENTY D. ET AL: "Deep Learning for the Precise Peak Detection in High-Resolution LC-MS Data", ANALYTICAL CHEMISTRY, vol. 92, no. 1, 16 December 2019 (2019-12-16), US, pages 588 - 592, XP093114427, ISSN: 0003-2700, DOI: 10.1021/acs.analchem.9b04811
- ARSENTY D. MELNIKOV: "Supplementary information for Deep learning for the precise peak detection in high-resolution LC-MS data", ANAL. CHEM. 92, 16 December 2019 (2019-12-16), pages 1 - 27, XP093160196, Retrieved from the Internet <URL:https://pubs.acs.org/doi/pdf/10.1021/acs.analchem.9b05002> [retrieved on 20240507]
- RISUM ANNE BECH ET AL: "Using deep learning to evaluate peaks in chromatographic data", TALANTA, ELSEVIER, AMSTERDAM, NL, vol. 204, 22 May 2019 (2019-05-22), pages 255 - 260, XP085747637, ISSN: 0039-9140, [retrieved on 20190522], DOI: 10.1016/J.TALANTA.2019.05.053

## Description

### TECHNICAL FIELD

The present invention relates to an analysis device and a program for processing a signal waveform obtained by analysis on a computer.

### BACKGROUND ART

In a liquid chromatograph (LC) device or a gas chromatograph (GC) device, a sample is introduced into a column, various components contained in the sample are separated in a time direction while the sample passes through the column, and the components are detected by a detector provided at an outlet of the column. In a chromatogram waveform created on the basis of a detection signal obtained by the detector, peaks corresponding to various components in the sample appear. Since a time (retention time) at which a peak is observed corresponds to one of the components, the component can be specified from the retention time of the peak, that is, qualitative analysis can be performed. In addition, since a height or an area of the peak corresponds to a concentration or a content of the component, the concentration and the content of the component can be obtained from a height value or an area value of the peak, that is, quantitative analysis can be performed.

In order to perform the qualitative analysis or the quantitative analysis, a peak needs to be properly detected in a chromatogram waveform, and the positions of the start point and the end point (retention time) of the peak need to be determined. In a chromatogram waveform obtained by analysis, various noises are included, the baseline fluctuates, or peaks derived from different components overlap. Therefore, it is not always easy to accurately detect a peak from a chromatogram waveform, and various algorithms for detecting a peak using a computer are conventionally used. As one of such peak detection methods, in recent years, a method using artificial intelligence (AI) technology represented by deep learning has been put into practical use (see Non Patent Literature 1).

The peak detection method described in Non Patent Literature 1 performs peak detection using a learned model generated by a so-called supervised machine learning. At the time of generation of such a learned model, that is, at the time of learning execution of the model, usually, a large number of pieces of teaching data are used in which a piece of teaching data includes a set of a chromatogram waveform collected by an actual analysis device and information (start point and end point) on a peak detected by an expert person for the waveform. One of major advantages of such a peak detection method using the AI technology is that, unlike many other peak detection methods, it is not necessary for the operator to set a troublesome detection condition (parameter) in advance or to make a judgment in a peak detection process.

### CITATION LIST

### NON PATENT LITERATURE

Non Patent Literature 1: "Waveform Processing Options Software for Peakintelligence™ Ver.2 LabSolutions Insight™", [Online], [Searched on April 7, 2021], Shimadzu Corporation, Internet <URL: https://www.an.shimadzu.co.jp/lcms/m_packcage/peakintelligence.htm>

Non Patent Literature 2: "Deep Learning for the Precise Peak Detection in High-Resolution LC-MS Data", Analytical Chemistry, vol. 92, no.1, 16 December 2019, pages 588-592, US ISSN: 0003-2700, DOI: 10.1021/acs.analchem.9b04811.

### SUMMARY OF INVENTION

### TECHNICAL PROBLEM

An effective method for increasing an accuracy of a learned model generated in a supervised machine learning such as deep learning is to use as much teaching data as possible covering a variation (fluctuation), for learning, in a feature of a detection target. However, it takes much time and effort to collect the teaching data. Furthermore, as an amount of teaching data increases, time and efforts for generating a learned model also increase rapidly, and the cost required therefor also increases. For this reason, the amount of teaching data to be prepared is limited, and when peak detection is performed using a learned model generated on the basis of such limited teaching data, there may be a problem that a peak that should be detected, which is observed in an actual chromatogram waveform, may not detected and is missed.

The present invention has been made to solve such a problem, and an object of the present invention is to provide an analysis device and a waveform processing program for the analysis device capable of satisfactorily detecting a peak that is often missed conventionally, while using an existing learned model.

### SOLUTION TO PROBLEM

The claimed invention is defined by the features set forth in the appended independent claims. Additional embodiments of the claimed invention are defined by the dependent claims.

### ADVANTAGEOUS EFFECTS OF INVENTION

According to the above mode of the analysis device and the waveform processing program for the analysis device according to the present invention, it is possible to satisfactorily detect a peak waveform that is likely to be missed conventionally due to low signal intensity of a peak in a signal waveform such as, for example, a chromatogram waveform while using an existing learned model. As a result, it is possible to improve a peak detection accuracy without regenerating a learned model.

### BRIEF DESCRIPTION OF DRAWINGS

[Fig. 1] Fig. 1 is a schematic configuration diagram of an LC device according to one embodiment of the present invention.
[Fig. 2] Fig. 2 is a schematic configuration diagram of a model generation device configured to generate a learned model used in the LC device illustrated in Fig. 1.
[Fig. 3] Fig. 3 is a diagram illustrating an example of a chromatogram waveform.
[Fig. 4] Figs. 4A, 4B, 4C, and 4D are explanatory diagrams of a peak detection processing in the LC device of the present embodiment.
[Fig. 5] Figs. 5A and 5B are explanatory diagrams of a peak detection processing in a conventional LC device.

### DESCRIPTION OF EMBODIMENTS

An analysis device according to the present invention can include: for example, a liquid chromatograph (LC) device including a liquid chromatograph mass spectrometer; a gas chromatograph (GC) device including a gas chromatograph mass spectrometer; a spectrum analysis device (e.g., an infrared absorption spectrophotometer, a visible-ultraviolet spectrophotometer, or a fluorescence spectrophotometer); an X-ray analysis device (e.g., an X-ray fluorescence analysis device or an X-ray diffraction analysis device); and the like.

Furthermore, a waveform processing program for the analysis device according to the present invention can be provided to a user by being stored in a non-transitory computer-readable recording medium such as a CD-ROM, a DVD-ROM, a memory card, or a USB memory (dongle). Furthermore, the program can be provided to the user in a form of data transfer via a communication line such as the Internet. In addition, the program can be preinstalled in a computer which is a part of the system (strictly, a storage device which is a part of the computer) when the user purchases the system.

Furthermore, in the present invention, the type of machine learning is not particularly limited as long as it is supervised machine learning, but in general, deep learning can be used.

An LC device of an embodiment of an analysis device according to the present invention will be described below with reference to the appended drawings.

### [Configuration of Device according to the Present Embodiment]

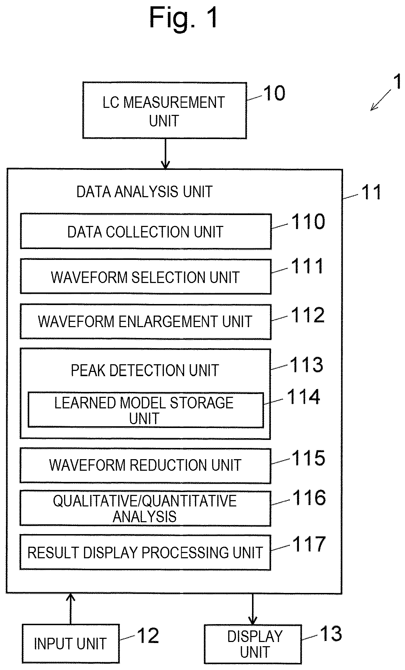

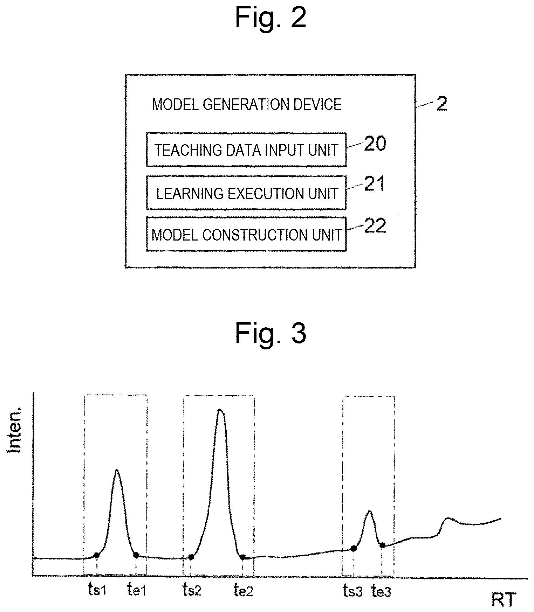

Fig. 1 is a schematic configuration diagram of the LC device according to the present embodiment. Fig. 2 is a schematic configuration diagram of a learned model generation device configured to generate a learned model used in the LC device illustrated in Fig. 1.

As illustrated in Fig. 1, an LC device 1 of the present embodiment includes an LC measurement unit 10, a data analysis unit 11, an input unit 12, and a display unit 13. Although not illustrated, the LC measurement unit 10 includes a mobile phase container, a liquid feeding pump, an injector, a column, a column oven, a detector, and others, and executes an LC analysis of a sample provided to output chromatogram data which indicates a temporal change in signal intensity acquired by a detector. The detector can be of any type or form, and may be, for example, a mass spectrometer, a photodiode array (PDA) detector, a fluorescence detector, or the like.

The data analysis unit 11 includes functional blocks such as a data collection unit 110, a waveform selection unit 111, a waveform enlargement unit 112, a peak detection unit 113, a waveform reduction unit 115, a qualitative/quantitative analysis unit 116, and a result display processing unit 117. The peak detection unit 113 includes a learned model storage unit 114 in which a learned model generated by performing learning in advance is stored. This learned model is substantially a peak discriminator which discriminates a peak waveform.

The entity of the data analysis unit 11 is a personal computer where predetermined software is installed, a workstation with higher-performance, or a computer system including a high-performance computer connected to such a computer via a communication line. That is, a function of each block included in the data analysis unit 11 can be embodied by processing using various data stored in a computer or a computer system, the processing being achieved by executing software installed in the standalone computer or the computer system including a plurality of computers. Of course, by replacing a part of a function of the data analysis unit 11 with a dedicated hardware circuit such as a digital signal processor, the processing can be speeded up.

As illustrated in Fig. 2, a model generation device 2 provided separately from the LC device 1 includes a teaching data input unit 20, a learning execution unit 21, and a model construction unit 22, as functional blocks. The learned model generated in the model generation device 2 is stored in the learned model storage unit 114 in the data analysis unit 11 of the LC device 1.

An entity of the model generation device 2 is a high-performance computer in which predetermined software is installed. As is well known, learning of a model based on a machine learning algorithm in deep learning or the like generally requires an enormous amount of calculation, and therefore a high-performance computer capable of high-speed calculation is used. Therefore, in many cases, the work of learning a model is performed in a manufacturer of the LC device 1, a company that develops software, or the like. In this case, the model generation device 2 itself is placed in such a manufacturer or company. Of course, if possible, the data analysis unit 11 of the LC device 1 may have a function of learning such a model.

### [Procedure of Generating a Learned Model]

First, an operation when generating a learned model in the model generation device 2 will be described.

In order to create the learned model, a plurality and a variety of chromatogram waveform data are prepared, and furthermore, retention times between a start point and an end point in a one or a plurality of the peaks appearing in each chromatogram waveform are accurately obtained. Here, a variety of chromatogram waveform data referred to as chromatogram waveforms including elements such as mixing of various noises, variation (drift) in a baseline, overlapping of a plurality of peaks, or deformation of a peak shape, the elements being likely to appear in a chromatogram waveform when a peak detection is actually performed.

Fig. 3 is an example of a chromatogram waveform acquired by the LC device. In this example, three peaks whose start point and end point are (tₛ₁, tₑ₁), (tₛ₂, tₑ₂), and (tₛ₃, tₑ₃) are observed. The teaching data input unit 20 reads a large number of pieces of teaching data in which such chromatogram waveform data, and accurate peak information including a start point and an end point of each peak are a set. Note that the chromatogram waveform may be a waveform in which a peak portion indicated by a dashed-dotted line in Fig. 3 is selected instead of the entire waveform from the start time point to the end time point in measurement as illustrated in Fig. 3.

For example, the learning execution unit 21 images the chromatogram waveform data and causes a model based on a predetermined method to learn the image and the correct peak information. On the basis of the learning result, the model construction unit 22 constructs a learning model for estimating a start point and an end point in a peak on the chromatogram waveform. As is well known, there are various algorithms in machine learning, and here, deep learning, which is one of general object detection algorithms in image recognition, is used, but a machine learning method that can be used is not limited to this.

The model construction unit 22 temporarily stores a learned model generated by learning using a large number of teaching data. In the learned model storage unit 114 of the LC device 1, the learned model generated in the model generation device 2 as described above is transferred and stored via, for example, a communication line or via a storage medium.

### [Peak Detection Processing for Measured Waveform]

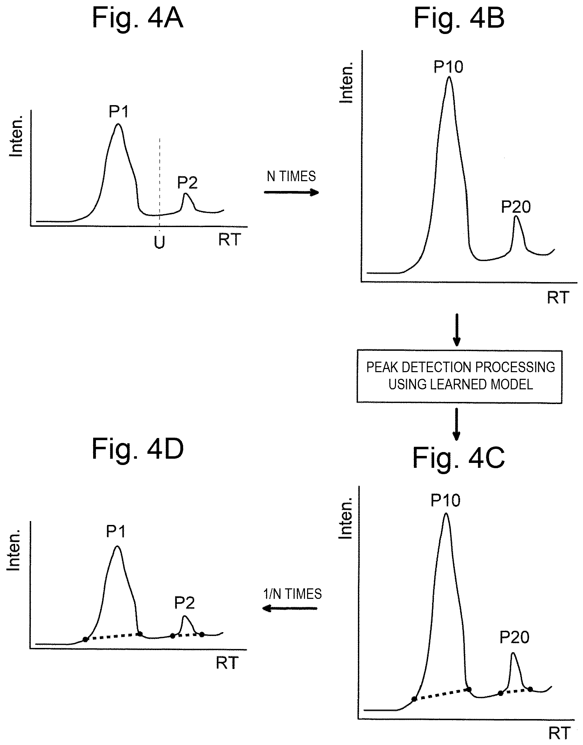

Next, an operation of the peak detection processing in the LC device 1 will be described with reference to Figs. 4A to 4D.

The LC measurement unit 10 performs LC analysis on an intended sample. In the data analysis unit 11, the data collection unit 110 acquires chromatogram data obtained by the LC measurement unit 10 and temporarily stores the acquired chromatogram data. Here, it is assumed that the chromatogram waveform illustrated in Fig. 4A is obtained by LC analysis.

When an instruction to execute peak detection processing is given from the input unit 12, the waveform selection unit 111 receives, from the data collection unit 110, chromatogram data to be processed. Then, the waveform selection unit 111 determines a retention time range of a target for which waveform enlargement is performed according to a predetermined reference.

Specifically, for example, a difference between a minimum signal intensity and a maximum signal intensity in chromatogram data to be processed is calculated, and if the difference is equal to or less than a predetermined threshold, the entire chromatogram (that is, the entire retention time range) can be set as a target waveform to be enlarged. Furthermore, the chromatogram may be divided into a plurality of pieces in the time axis direction with a position (for example, a position U in Fig. 4A) where a change in signal intensity is low in the time axis direction as a boundary, and whether or not the retention time range is a target waveform to be enlarged according to the reference as described above may be determined for each of the divided waveforms.

The reason why the waveform selection unit 111 determines a retention time range for a target waveform to be enlarged is to enlarge the waveform only in the holding time range that is likely to be missed because a signal intensity of a peak is low, and not to enlarge the waveform in the holding time range that is not likely to be missed because a signal intensity of a peak is high. As long as a determination of a waveform shape corresponding to such a purpose is possible, the method is not limited to that described above. Furthermore, even in a case where the signal intensity is further increased by enlarging the waveform if the signal intensity of the peak is high, the waveform selection unit 111 may be omitted and all the retention time ranges may be set as a target waveform to be enlarged if substantially no problem occurs.

In an example of Fig. 4A, it is assumed that the entire chromatogram waveform is a target waveform to be enlarged. Next, as illustrated in Fig. 4B, the waveform enlargement unit 112 performs enlargement processing of multiplying the signal intensity by N (here, N is a value larger than 1) (multiplying the signal intensity by N in the vertical axis direction) for the waveform included in the retention time range determined as a target waveform to be enlarged. Two peaks P1 and P2 (which are not detected as peaks at this time point) present on the original chromatogram waveform correspond to peaks P10 and P20, respectively, on the enlarged chromatogram waveform. Note that the value of N may be a predetermined value or may be appropriately selectable by a user.

The peak detection unit 113 receives the peak information including a start point and an end point of a peak as an output by inputting the chromatogram waveform with a signal intensity increased as described above to a learned model stored in a learned model storage unit 114. The peak information is information on a peak automatically detected by a peak discriminator in the input chromatogram waveform. Fig. 4C is a diagram illustrating a dotted line in which positions of a start point and an end point in a peak automatically detected with respect to the chromatogram waveform illustrated in Fig. 4B and a start point and an end point in a peak to be paired are connected by a straight line. Here, two peaks P10 and P20 are accurately detected.

After the peak detection is performed in this way, the waveform reduction unit 115 executes processing inverse to that of the waveform enlargement unit 112. That is, the waveform reduction unit 115 performs reduction processing of multiplying a signal intensity by 1/N (setting to 1/N in the vertical axis direction) on the chromatogram waveform included in the retention time range determined as a target waveform to be enlarged. As a result, the signal intensity corresponding to the peak start point and the end point, which are the peak detection results in the enlarged chromatogram waveform as illustrated in Fig. 4C, decreases together with the chromatogram waveform as illustrated in Fig. 4D. As a result, a peak detection result substantially equivalent to a case where the peak detection is performed on the original chromatogram waveform illustrated in Fig. 4A is obtained.

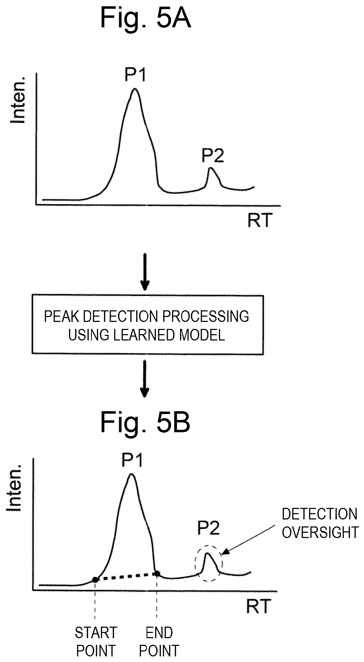

Fig. 5 is an explanatory diagram of processing in a case where automatic detection of a peak is performed in the peak detection unit 113 for a chromatogram waveform that is not subjected to waveform enlargement. This corresponds to a peak detection processing in a conventional LC device.

In this case, a signal intensity of the peak P2 on the chromatogram waveform is considerably lower than that of the peak P1. Generally, in machine learning such as deep learning, a generated learned model does not have an ability to recognize a peak having a low signal intensity unless teaching data appropriately labeled to recognize such a peak having a low signal intensity as a peak is given at the time of model learning. Therefore, as illustrated in Fig. 5B, the peak P1 having a high signal intensity is detected, but detection of the peak P2 having a low signal intensity is subjected to detection oversight.

As described above, in a case where teaching data is prepared, a deformation and a variation of a peak waveform that can occur are assumed, but cost and time for generating a learned model increase as an amount of teaching data increases, and thus it is often necessary to limit the amount of teaching data due to cost and time constraints. Furthermore, since there are various demands of users who use the LC device, there may be a user who have a demand to detect a peak having a low signal intensity which is not assumed at the time of generating a learned model. In the latter case, although it is possible to meet the demand by adding new teaching data and regenerating the learned model, its work is considerably enormous and the cost burden is large.

By contrast, the LC device 1 of the present embodiment can detect a peak having a low signal intensity, which has been subjected to detection oversight, without changing the learned model, that is, with an existing learned model having no ability to recognize a peak having a low signal intensity. In the data analysis unit 11, adding functions of the waveform selection unit 111, the waveform enlargement unit 112, and the waveform reduction unit 115, specifically, adding programs for realizing such functions is much easier and requires less cost and time as compared with a case of reconstructing the learned model using new teaching data. As described above, according to the LC device 1 of the present embodiment, it is possible to improve an accuracy of peak detection while saving cost and time.

In the data analysis unit 11, the qualitative/quantitative analysis unit 116 identifies a component (compound) corresponding to each peak on the basis of the peak information given from the peak detection unit 113. Alternatively, a peak height value or a peak area value is calculated, and a quantitative value which is a concentration or a content of each component is calculated therefrom. The result display processing unit 117 receives the identification result and the quantitative result of each component and displays them on the display unit 13 in a predetermined format. Furthermore, the result display processing unit 117 may display a chromatogram waveform including the peak detection result as illustrated in Fig. 4D on the display unit 13.

### [Modifications]

In the LC device 1 of the above embodiment, the waveform enlargement unit 112 and the waveform reduction unit 115 enlarge/reduce a chromatogram waveform only in the signal intensity axis direction, but a chromatogram waveform may also be enlarged/reduced in the time axis direction. When a chromatogram waveform is enlarged only in the signal intensity axis direction, the peak shape becomes vertically long. That is, a value of peak half-value width/peak height decreases. Depending on how learning is performed using teaching data at the time of model learning, there may be a case where the peak deformed to make the value of the peak half-value width/peak height become small cannot be appropriately detected. Therefore, depending on the characteristics of the learned model to be used, it is preferable that the chromatogram waveform is enlarged or reduced in the signal intensity axis direction, and the waveform is also enlarged or reduced in the time axis direction.

In this case, the scale factor of the enlargement in the signal intensity axis direction and the scale factor of the enlargement in the time axis direction are not necessarily the same. That is, the chromatogram waveform is enlarged by a scale factor of N in the signal intensity axis direction and by a scale factor of M in the time axis direction (where M may be a value larger than 1 and N may be equal to M) before peak detection, and the chromatogram waveform is reduced by a scale factor of 1/N in the signal intensity axis direction and by a scale factor of 1/M in the time axis direction after peak detection.

Furthermore, the waveform enlargement unit 112 and the waveform reduction unit 115 may fail to enlarge/reduce the chromatogram waveform in the signal intensity axis direction, and may enlarge/reduce the chromatogram waveform only in the time axis direction. This is useful in a situation where the chromatogram waveform is compressed in the time axis direction because the LC separation condition is different from an assumed state, for example, speed of a mobile phase in an actual LC analysis is fast.

Furthermore, in the LC device 1 of the above embodiment, the chromatogram waveform is enlarged before the peak detection, and the chromatogram waveform is reduced after the peak detection. However, depending on characteristics of a learned model to be used, the chromatogram waveform may be reduced before the peak detection, and the chromatogram waveform may be enlarged and restored after the peak detection. Contrary to the above description, this is useful in a situation where a signal intensity of a peak in a waveform to be actually processed is excessively higher than a range of variation in a signal intensity of a peak assumed at the time of model learning. Furthermore, this is useful in a situation where the chromatogram waveform is extended in the time axis direction because the LC separation condition is different from an assumed state, for example, speed of a mobile phase in an actual LC analysis is low.

Furthermore, in the LC device 1 of the above embodiment, a plurality of peaks are detected by one peak detection processing for the chromatogram waveform, but it is also possible to detect peaks having greatly different signal intensities without oversight as much as possible by repeatedly performing a plurality times of peak detection processing as follows.

That is, for example, with respect to a chromatogram waveform of a processing target as illustrated in Fig. 4A, a first peak detection processing performs peak detection as in a conventional detection without performing waveform enlargement/reduction. In this case, as described with reference to Fig. 5, there is a possibility that the peak P1 is detected and the peak P2 is likely to be subjected to detection oversight. Next, the peak detected in the first peak detection processing is removed (for example, the start point and the end point of the peak P1 in Fig. 5B are connected by a straight line), and then, as a second peak detection processing, peak detection with waveform enlargement/reduction performed as described above is performed. In this case, since the peak P10 in Fig. 4B does not exist, only the remaining peak P20 is detected. At this time, the peak P20 has a high signal intensity and thus is detected without oversight. In this manner, peak detection with less oversight is possible by aggregating peak information detected in a plurality of times of peak detection processing to create a final peak detection result.

Reasonably, it is also possible to repeat the peak detection processing three or more times by further changing a scale factor of enlargement/reduction in multiple stages or by performing enlargement/reduction of a scale factor that is different in each of the signal intensity axis direction and the time axis direction.

Furthermore, although the above-described embodiment is about an LC device, the present invention can be applied to a GC device instead of an LC device, and can also be applied to various analysis devices other than those devices.

For example, it is obvious that the present invention can also be applied to a case where peak detection is performed on spectrum waveforms such as a mass spectrum obtained by a mass spectrometer, an optical spectrum obtained by various spectroscopic analysis devices such as an absorption spectrophotometer and a fluorescence spectrophotometer, an ion mobility spectrum obtained by an ion mobility analysis device, and an X-ray spectrum obtained by an X-ray analysis device.

In addition, it is obvious that the present invention is not limited to the above-described embodiments and modifications and any modification, correction and that any addition appropriately made within the scope of the gist of the present invention are included in the claims of the present application.

### [Various Modes]

It will be understood by those skilled in the art that the embodiments described above are specific examples of the following modes.

An analysis device and a waveform processing program for an analysis device according to the claimed invention are defined by the features set forth in the appended independent claims.

According to the claimed analysis device and the waveform processing program for the analysis, it is possible to satisfactorily detect a peak waveform that is likely to be missed conventionally due to low signal intensity of a peak in a signal waveform such as, for example, a chromatogram waveform while using an existing learned model. As a result, it is possible to improve a peak detection accuracy without regenerating a learned model. Moreover, the claimed analysis device can perform the enlargement or reduction processing on, for example, only a partial signal waveform having a particularly low or particularly high signal intensity, instead of the signal waveform corresponding to all the parameter value ranges acquired by analysis. As a result, the range of a signal intensity of a peak can be narrowed, and even in a case of using a learned model in which an allowable range of variation with respect to a signal intensity is relatively narrow, the peak can be accurately detected.

According to a first aspect of the claimed invention that may be implemented in combination with the claimed invention, the predetermined parameter may be time, and the signal waveform may be a chromatogram waveform.

In particular, in a chromatogram waveform obtained by an LC device, drift of a base line, overlapping of a plurality of peaks due to incomplete separation of a plurality of components, and the like are likely to occur. Therefore, it is difficult to detect all peaks using a specific algorithm, and adjustment and setting of parameters tend to be troublesome. By contrast, according to the analysis device described in the above first aspect, it is possible to detect a peak with high accuracy while simplifying the troublesome parameter adjustment and setting.

According to a second aspect of the claimed invention that may be implemented in combination with the claimed invention or with the above first aspect, the machine learning may be deep learning.

Among various methods of machine learning, deep learning particularly tends to be difficult to sufficiently obtain performance for data having a feature which is not included in teaching data at the time of model learning. By contrast, according to the analysis device described in the above second aspect, it is possible to detect a peak with high accuracy while using an existing learned model.

According to a third aspect of the claimed invention that may be implemented in combination with the claimed invention, the value of N and/or the value of M is a predetermined value or a value selected by a user.

### REFERENCE SIGNS LIST

- 1: LC Device
- 10: LC Measurement Unit
- 11: Data Analysis Unit
- 110: Data Collection Unit
- 111: Waveform Selection Unit
- 112: Waveform Enlargement Unit
- 113: Peak Detection Unit
- 114: Learned Model Storage Unit
- 115: Waveform Reduction Unit
- 116: Qualitative/Quantitative Analysis Unit
- 117: Result Display Processing Unit
- 12: Input Unit
- 13: Display Unit
- 2: Model Generation Device
- 20: Teaching Data Input Unit
- 21: Learning Execution Unit
- 22: Model Construction Unit

## Claims

1. An analysis device (1) comprising:
a waveform deformation unit (112) configured to enlarge or reduce a target signal waveform obtained by analysis and indicating a change in signal intensity depending on a change in a value of a predetermined parameter by a scale factor of N (where N is a positive value other than 0 and 1) in the direction of the signal intensity axis and/or enlarge or reduce by a scale factor of M (where M may be a positive value other than 0 and 1 and may be a same value as N) in the direction of the predetermined parameter axis;
a peak detection unit (113) configured to use a learned model generated in advance by machine learning using, as teaching data, a signal waveform and a start point and an end point of a correct solution, and use, as an input, a signal waveform after deformation by the waveform deformation unit (112), and output, as a detection result, the start point and the end point of the peak;
a waveform inverse deformation unit (114) configured to reduce or enlarge information on a start point and an end point of a peak, the information being output by the peak detection unit (113), by a scale factor of 1/N in the direction of the signal intensity axis and/or by a scale factor of 1/M in the direction of the predetermined parameter axis inverse to that at the time of deformation by the waveform deformation unit (112), and obtain a peak detection result for the target signal waveform, **characterized in that** the analysis device comprises
a determination unit configured to determine a magnitude of a variation in a signal intensity level in the target signal waveform, wherein the waveform deformation unit (112) is configured to perform processing of enlarging or reducing a signal waveform for a parameter value range for which the determination unit determines that a variation in the signal intensity level is lower or higher than a specified value.

2. The analysis device (1) according to claim 1, wherein the predetermined parameter is time, and the signal waveform is a chromatogram waveform.

3. The analysis device (1) according to claim 1, wherein the machine learning is deep learning.

4. A waveform processing program for an analysis device (1), the program configured to process, on a computer, a target signal waveform indicating a change in signal intensity depending on a change in a value of a predetermined parameter, the program causing the computer to execute:
a waveform deformation step of enlarging or reducing the target signal waveform by a scale factor of N (where N is a positive value other than 0 and 1) in the direction of the signal intensity axis and/or enlarging or reducing the target signal waveform by a scale factor of M (where M may be a positive value other than 0 and 1 and may be a same value as N) in the direction of the predetermined parameter axis;
a peak detection step of using a learned model generated in advance by machine learning using, as teaching data, a signal waveform and a start point and an end point of a correct solution, and using, as an input, a signal waveform after deformation in the waveform deformation step, and outputting, as a detection result, the start point and the end point of the peak;
a waveform inverse deformation step of reducing or enlarging information on a start point and an end point of a peak, the information being output in the peak detection step, by a scale factor inverse to that at the time of deformation in the waveform deformation step, and obtaining a peak detection result for the target signal waveform; and **characterized in that** the program further causes the computer to execute
a step of determining a magnitude of a variation in a signal intensity level in the target signal waveform, wherein processing of enlarging or reducing a signal waveform is performed for a parameter value range for which it is determined that a variation in the signal intensity level is lower or higher than a specified value.

5. The analysis device according to claim 1, wherein the value of N and/or the value of M is a predetermined value or a value selected by a user.

## Patentansprüche

1. Eine Analysevorrichtung (1), die Folgendes umfasst:
eine Wellenform-Deformationseinheit (112), die konfiguriert ist, um eine durch Analyse erhaltene Zielsignalwellenform, welche eine Änderung der Signalintensität in Abhängigkeit von einer Änderung eines Wertes eines vorbestimmten Parameters anzeigt, in Richtung der Signalintensitätsachse um einen Skalierungsfaktor N zu vergrößern oder zu verkleinern (wobei N ein positiver Wert ungleich 0 und 1 ist), und/oder in Richtung der vorbestimmten Parameterachse um einen Skalierungsfaktor von M zu vergrößern oder zu verkleinern (wobei M ein positiver Wert ungleich 0 und 1 sein kann und derselbe Wert wie N sein kann);
eine Peak-Detektionseinheit (113), die dazu konfiguriert ist, ein vorab durch maschinelles Lernen erzeugtes Lernmodell zu verwenden, wobei als Lehrdaten eine Signalwellenform und ein Startpunkt und ein Endpunkt einer korrekten Lösung verwendet werden, und wobei als Eingabe eine nach Deformation durch die Wellenform-Deformationseinheit (112) erhaltene Signalwellenform verwendet wird, und als Detektionsergebnis den Startpunkt und den Endpunkt des Peaks auszugeben;
eine Wellenform-Rückdeformationseinheit (114), die konfiguriert ist, um Informationen über einen Startpunkt und einen Endpunkt eines Peaks, wobei die Informationen von der Peak-Detektionseinheit (113) ausgegeben werden, um einen Skalierungsfaktor von 1/N in Richtung der Signalintensitätsachse und/oder um einen Skalierungsfaktor von 1/M in Richtung der vorbestimmten Parameterachse, invers zu dem zum Zeitpunkt der Deformation durch die Wellenform-Deformationseinheit (112), zu verkleinern oder zu vergrößern und ein Peak-Detektionsergebnis für die Zielsignalwellenform zu erhalten;
**dadurch gekennzeichnet, dass** die Analysevorrichtung Folgendes umfasst:
eine Bestimmungseinheit, die dazu konfiguriert ist, eine Größe einer Variation eines Signalintensitätsniveaus in der Zielsignalwellenform zu bestimmen, wobei die Wellenform-Deformationseinheit (112) konfiguriert ist, um eine Verarbeitung zum Vergrößern oder Verkleinern einer Signalwellenform für einen Parameterwertbereich durchzuführen, für den die Bestimmungseinheit bestimmt, dass eine Variation des Signalintensitätsniveaus niedriger oder höher als ein festgelegter Wert ist.

2. Die Analysevorrichtung (1) nach Anspruch 1, wobei der vorbestimmte Parameter Zeit ist und die Signalwellenform eine Chromatogramm-Wellenform ist.

3. Die Analysevorrichtung (1) nach Anspruch 1, wobei das maschinelle Lernen *Deep Learning* ist.

4. Ein Wellenformverarbeitungsprogramm für eine Analysevorrichtung (1), wobei das Programm konfiguriert ist, um auf einem Computer eine Zielsignalwellenform zu verarbeiten, die eine Änderung der Signalintensität in Abhängigkeit von einer Änderung eines Wertes eines vorbestimmten Parameters anzeigt, wobei das Programm den Computer veranlasst, Folgendes auszuführen:
einen Wellenform-Deformationsschritt, zum Vergrößern oder Verkleinern der Zielsignalwellenform um einen Skalierungsfaktor N (wobei N ein positiver Wert ungleich 0 und 1 ist) in Richtung der Signalintensitätsachse und/oder zum Vergrößern oder Verkleinern der Zielsignalwellenform um einen Skalierungsfaktor M (wobei M ein positiver Wert ungleich 0 und 1 sein kann und denselben Wert wie N haben kann) in Richtung der vorbestimmten Parameterachse;
einen Peak-Detektionsschritt, bei dem ein zuvor durch maschinelles Lernen erzeugtes trainiertes Modell verwendet wird, wobei als Lehrdaten eine Signalwellenform und ein Startpunkt und ein Endpunkt einer korrekten Lösung verwendet werden, und wobei als Eingabe eine Signalwellenform nach der Deformation im Wellenform-Deformationsschritt verwendet wird, und wobei als Detektionsergebnis der Startpunkt und der Endpunkt der Spitze ausgegeben werden;
einen Wellenform-Rückdeformationsschritt, zum Verkleinern oder Vergrößern von Informationen über einen Startpunkt und einen Endpunkt eines Peaks, wobei die Informationen im Peak-Detektionsschritt ausgegeben werden, um einen Skalierungsfaktor, der umgekehrt (*inverse*) zu dem zum Zeitpunkt der Deformation im Wellenform-Deformationsschritt ist, und zum Erhalten eines Peak-Detektionsergebnisses für die Zielsignalwellenform; und
**dadurch gekennzeichnet, dass** das Programm den Computer ferner veranlasst, Folgendes auszuführen:
einen Schritt zum Bestimmen einer Größe einer Variation eines Signalintensitätsniveaus in der Zielsignalwellenform, wobei die Verarbeitung zum Vergrößern oder Verkleinern einer Signalwellenform für einen Parameterwertebereich durchgeführt wird, für den bestimmt wird, dass eine Variation des Signalintensitätsniveaus niedriger oder höher als ein festgelegter Wert ist.

5. Die Analysegerät nach Anspruch 1, wobei der Wert von N und/oder der Wert von M ein vorbestimmter Wert oder ein vom Benutzer ausgewählter Wert ist.

## Revendications

1. Un dispositif d'analyse (1) comprenant :
une unité de déformation de forme d'onde (112) configurée pour agrandir ou réduire une forme d'onde de signal cible obtenue par analyse et indiquant un changement d'intensité du signal en fonction d'un changement de valeur d'un paramètre prédéterminé par un facteur d'échelle N (où N est une valeur positive autre que 0 et 1) dans la direction de l'axe d'intensité du signal, et/ou pour agrandir ou réduire par un facteur d'échelle M (où M peut être une valeur positive autre que 0 et 1 et peut être une valeur identique à N) dans la direction de l'axe du paramètre prédéterminé ;
une unité de détection de pic (113) configurée pour utiliser un modèle entraîné généré à l'avance par apprentissage automatique en utilisant, comme données d'apprentissage, une forme d'onde de signal et un point de début et un point de fin d'une solution correcte, et pour utiliser, comme entrée, une forme d'onde de signal après déformation par l'unité de déformation de forme d'onde (112), et pour sortir, comme résultat de détection, le point de début et le point de fin du pic ;
une unité de déformation inverse de forme d'onde (114) configurée pour réduire ou agrandir des informations sur un point de début et un point de fin d'un pic, les informations étant sorties par l'unité de détection de pic (113), par un facteur d'échelle de 1/N dans la direction de l'axe d'intensité du signal et/ou par un facteur d'échelle de 1/M dans la direction de l'axe de paramètre prédéterminé, inverse à celui utilisé au moment de la déformation par l'unité de déformation de forme d'onde (112), et pour obtenir un résultat de détection de pic pour la forme d'onde de signal cible ;
**caractérisé en ce que** le dispositif d'analyse comprend
une unité de détermination configurée pour déterminer une amplitude d'une variation dans un niveau d'intensité de signal dans la forme d'onde de signal cible, sachant que l'unité de déformation de forme d'onde (112) est configurée pour effectuer un traitement d'agrandissement ou de réduction d'une forme d'onde de signal pour une plage de valeurs de paramètre pour laquelle l'unité de détermination détermine qu'une variation dans le niveau d'intensité de signal est inférieure ou supérieure à une valeur spécifiée.

2. Le dispositif d'analyse (1) d'après la revendication 1, sachant que le paramètre prédéterminé est le temps et la forme d'onde de signal est une forme d'onde de chromatogramme.

3. Le dispositif d'analyse (1) d'après la revendication 1, sachant que l'apprentissage automatique est mis en œuvre sous forme d'apprentissage profond (*deep learning).*

4. Un programme de traitement de forme d'onde pour un dispositif d'analyse (1), le programme étant configuré pour traiter, sur un ordinateur, une forme d'onde de signal cible indiquant un changement d'intensité du signal en fonction d'un changement de valeur d'un paramètre prédéterminé, le programme amenant l'ordinateur à exécuter :
une étape de déformation de forme d'onde consistant à agrandir ou réduire la forme d'onde de signal cible d'un facteur d'échelle N (où N est une valeur positive autre que 0 et 1) dans la direction de l'axe d'intensité du signal, et/ou à agrandir ou réduire la forme d'onde de signal cible d'un facteur d'échelle M (où M peut être une valeur positive autre que 0 et 1 et peut être une valeur identique à N) dans la direction de l'axe du paramètre prédéterminé ;
une étape de détection de pic consistant à utiliser un modèle entraîné généré à l'avance par apprentissage automatique en utilisant, comme données d'apprentissage, une forme d'onde de signal et un point de début et un point de fin d'une solution correcte, et en utilisant, comme entrée, une forme d'onde de signal après déformation dans l'étape de déformation de forme d'onde, et en sortant, comme résultat de détection, le point de début et le point de fin du pic ;
une étape de déformation inverse de forme d'onde consistant à réduire ou agrandir des informations sur un point de début et un point de fin d'un pic, les informations étant sorties dans l'étape de détection de pic, par un facteur d'échelle inverse à celui au moment de la déformation dans l'étape de déformation de la forme d'onde, et à obtenir un résultat de détection de pic pour la forme d'onde de signal cible ; et
**caractérisé en ce que** le programme amène en outre l'ordinateur à exécuter
une étape consistant à déterminer une amplitude d'une variation d'un niveau d'intensité de signal dans la forme d'onde de signal cible, sachant que le traitement d'agrandissement ou de réduction d'une forme d'onde de signal est effectué pour une plage de valeurs de paramètres pour laquelle il est déterminé qu'une variation du niveau d'intensité de signal est inférieure ou supérieure à une valeur spécifiée.

5. Le dispositif d'analyse d'après la revendication 1, sachant que la valeur de N et/ou la valeur de M est une valeur prédéterminée ou une valeur sélectionnée par un utilisateur.
